# EUROPÄISCHE PATENTSCHRIFT

(11) **EP 0 413 047 B1**
(45) Veröffentlichungstag und Bekanntmachung des Hinweises auf die Patenterteilung: **01.06.1994**
(21) Anmeldenummer: 89115232.4
(22) Anmeldetag: 18.08.1989
(51) Int. Cl.: F16H 61/36, F16H 63/20

(54) **Schaltvorrichtung für ein Zahnräder-Wechselgetriebe eines Kraftfahrzeugs**
Actuating device for a stepped toothed gearing for automotive vehicles
Dispositif d'actionnement pour une boîte de vitesse d'un véhicule à moteur

(43) Veröffentlichungstag der Anmeldung: 20.02.1991
(73) Patentinhaber: Dr.Ing.h.c. F. Porsche Aktiengesellschaft, 70435 Stuttgart (DE)
(72) Erfinder: Knape, Dieter, D-7100 Heilbronn (DE)

(56) Entgegenhaltungen:
- EP-A- 0 084 239
- EP-A- 0 117 341
- EP-A- 0 360 410
- DE-A- 2 313 366
- US-A- 1 897 216
- US-A- 4 539 859

## Beschreibung

Die Erfindung betrifft eine Schaltvorrichtung für ein Zahnräder-Wechselgetriebe eines Kraftfahrzeugs nach dem Oberbegriff des Anspruchs 1, wie aus der DE-A- 23 13 366 bekannt.

Eine ähnliche Schaltvorrichtung für ein Gangschaltgetriebe ist in der Zeitschrift "Sport Auto" 4/1988, Seite 127 beschrieben. Mit einem ersten, vom Gangschalthebel betätigten Bowdenzug werden die Getriebegänge vorgewählt, mit einem zweiten Bowdenzug werden die einzelnen Getriebegänge über Schaltgabeln und Synchronisierkupplungen geschaltet. Als Verbindung von den Schaltgabeln zu der durch die Bowdenzüge betätigten Vorwählwelle und Schaltwelle dient eine Betätigungsvorrichtung, wie sie aus DE-C- 31 25 632 bekannt ist. Die Schaltwelle ist mit einem radial abstehenden Schaltfinger versehen, welcher in Schaltgassen bildende Ausnehmungen von Schaltschienen eingreift. Die auf die Schaltgabeln einwirkenden Schaltschienen sind quer zur Schaltwelle bewegbar. Durch Verschieben des Schaltfingers in Achsrichtung der Schaltwelle werden die Getriebegänge vorgewählt, durch Verschwenken des Schaltfingers sind die Getriebegänge schaltbar. Die neben der gewählten Schaltgasse liegenden Schaltschienen sind jeweils durch Nocken gesperrt, die einstückig mit dem Schaltfinger ausgebildet sind und von innen an kreisbogenförmigen Wandteilen der Schaltschienen anliegen.

Ausgehend von diesen bekannten Schaltvorrichtungen ist es die Aufgabe der Erfindung, eine Schaltvorrichtung für ein Zahnräder-Wechselgetriebe eines Kraftfahrzeugs zu schaffen, die einen geringen Bauraum erfordert und am Getriebegehäuse leicht montierbar ist.

Zur Lösung dieser Aufgabe dienen die kennzeichnenden Merkmale des Anspruchs 1. Da die gesamte Betätigungsvorrichtung als vormontierbare Baueinheit gestaltet ist, die in einen abnehmbaren Deckel des am Getriebegehäuse angebrachten Schaltgehäuses untergebracht ist, läßt sich die Montage einfach und kostengünstig durchführen. Eine besonders raumsparende und funktionssichere Bauweise der Betätigungsvorrichtung ermöglicht gemäß Anspruch 3 die Verwendung eines Schaltstückes, das mit einem Schaltfinger in die eine Schaltschiene formschlüssig eingreift und zugleich mit Sperrnocken die beiden anderen Schaltschienen sperrt.

Zusätzliche, die Erfindung ausgestaltende Merkmale sind in weiteren Unteransprüchen enthalten.

Ein Ausführungsbeispiel der Erfindung ist in der Zeichnung dargestellt und wird nachfolgend erläutert.

Es zeigt:

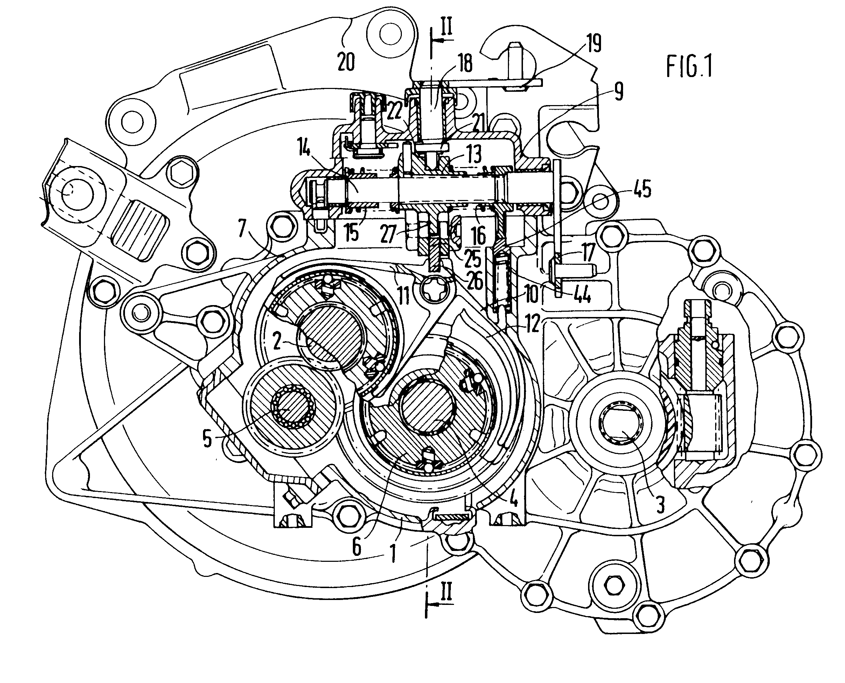

Fig. 1 Querschnitt einer Schaltvorrichtung für ein 5-Gang-Getriebe,

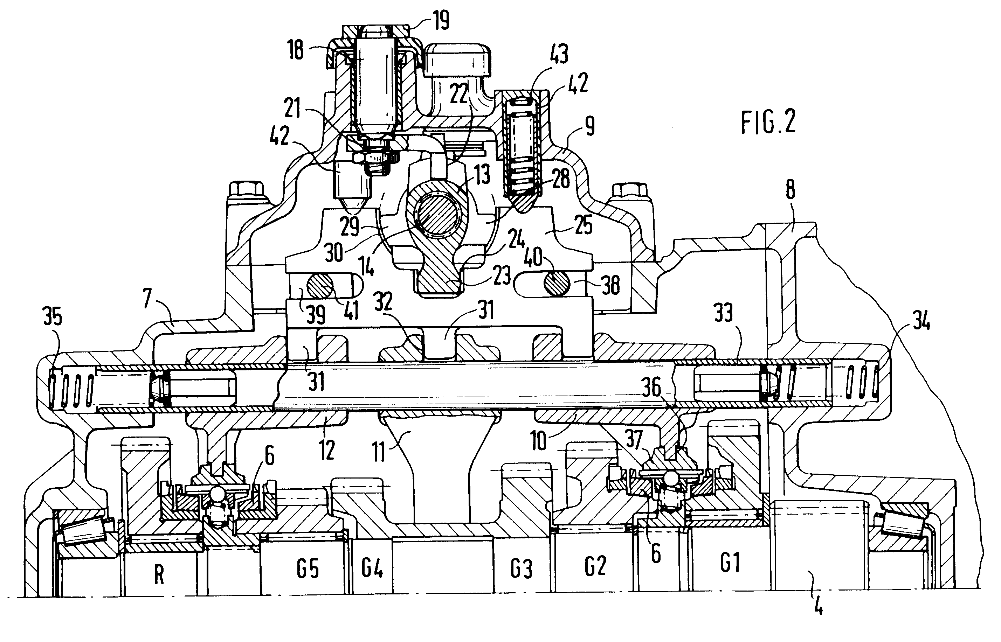

Fig. 2 Längsschnitt der Schaltvorrichtung nach Linie II-II der Fig. 1,

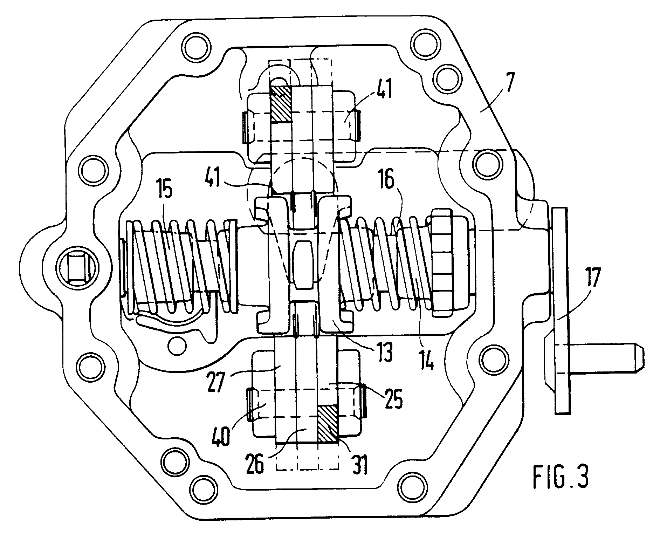

Fig. 3 Draufsicht auf die Schaltvorrichtung bei abgenommenem Deckel.

In einem Getriebegehäuse 1 eines Kraftfahrzeugs sind zueinander parallel eine vom Motor angetriebene Antriebswelle 2, eine die Vorderachse 3 des Kraftfahrzeugs antreibende Abtriebswelle 4 und eine Zwischenwelle 5 für den Rückwärtsgang R gelagert. Die aus jeweils einem Festrad und einem mit ihm kämmenden Losrad bestehenden Getriebegänge G1, G2, G3, G4 und G5 sowie der Rückwärtsgang R sind in dieser Reihenfolge auf der Antriebswelle 2 bzw. Abtriebswelle 4 angeordnet und mit ihnen mittels Synchronisierkupplungen 6 verbindbar.

In seinem oberen Bereich ist an das Getriebegehäuse 1 ein Schaltgehäuse 7 angegossen und gemeinsam mit dem Getriebegehäuse 1 durch einen stirnseitigen Lagerdeckel 8 verschlossen. Auf das oben offene Schaltgehäuse 7 ist ein Deckel 9 aufgeschraubt, der die gesamte Betätigungsvorrichtung für die in die Schiebemuffen der Synchronisierkupplungen 6 eingreifenden Schaltgabeln 10, 11 und 12 enthält. Als zentrales Glied der Betätigungsvorrichtung dient ein Schaltstück 13, das mit einer Schaltwelle 14 mittels Kerbzahnverbindung drehmomentübertragend verbunden ist und zum Vorwählen der Gänge auf der Schaltwelle 14 entgegen der Kraft einer links an ihm anliegenden Schraubenfeder 15 und einer rechten Schraubenfeder 16 längsverschieblich ist. Die Schaltwelle 14 ist mit einem stirnseitig angebrachten Hebel 17 an einem nicht dargestellten, zu einem Gangschalthebel führenden Bowdenzug angelenkt. Die Vorwählbewegung wird mit einer Kurbelwelle 18 ausgeführt, die senkrecht zur Schaltwelle 14 im Deckel 9 gelagert ist und mit einem stirnseitigen Hebel 19 an einen ebenfalls mit dem Gangschalthebel verbundenen Bowdenzug 20 angelenkt ist.

Am anderen Ende trägt die Vorwählwelle 18 einen Wählhebel 21, der in eine Nut (22) an der Oberseite des Schaltstücks 13 eingreift. Diametral zu der Nut (22) gegenüberliegend ist an der Rohrnabe des Schaltstücks (13) ein Schaltfinger (23) angegossen, der in entsprechend geformte, durchgehende Nuten (24) von drei aneinander anliegenden Schaltschienen 25, 26, 27 einführbar ist. Senkrecht zum Schaltfinger sind an dem Schaltstück (13) zwei radial vorstehende Sperrnocken 28, 29 angebracht; sie bilden mit der durch den Schaltfinger und die Nut gehenden Mittelebene des Schaltstücks ein Kreuz. Die Außenkontur der Sperrnocken 28 ist kreisbogenförmig und ist in Kreisaussparungen 30 der Schaltschienen 25, 26, 27 einführbar. Die Sperrnocken 28, 29 sind in Längsrichtung des Schaltstücks 13 so zum Schaltfinger 23 angeordnet, daß, wenn der Schaltfinger 23 in die Nut 24 der einen Schaltschiene 25 eingreift, die Sperrnocken 28, 29 in Kreisaussparungen 30 der beiden anderen Schaltschienen 26, 27 eingreifen und die unverschieblich arretieren.

Jede der drei Schaltschienen 25, 26, 27 trägt an ihrer Unterseite eine Schaltnase 31, wobei die Schaltnase 31 der mittleren Schaltschiene 26 in eine Ausnehmung 32 der mittleren Schaltgabel 11, die Schaltnasen 31 der linken und rechten Schaltschienen 25, 27 in die linke Schaltgabel 12 bzw. rechte Schaltgabel 10 eingreifen.

Die Schaltgabeln 10, 11, 12 sind auf einem zur Abtriebswelle 4 parallelen Führungsrohr 33 längsbeweglich geführt, das im Schaltgehäuse 7 gelagert und ihm gegenüber durch beidseitige Federn 34 und 35 längsbeweglich abgestützt ist, um ein Verklemmen der Schaltgabeln 10, 11, 12 zu vermeiden. Die Schaltgabeln greifen mit ihren Gabeln in Ringausdrehungen der die Synchronisierkupplungen 6 betätigenden Schiebemuffen 37 ein.

Um die Schaltschienen 25, 26, 27 parallel zum Führungsrohr 33 längsführen zu können, weisen sie beidseitig Schlitze 38, 39 auf, in die Nieten 40, 41 eingepaßt sind. Von oben her greifen in Ausnehmungen der Schaltschienen 25, 26, 27 Sperrhülsen 42 ein, die parallel liegend zur Vorwählwelle 18 im Deckel 9 längsbeweglich eingepaßt und durch Schraubenfedern 43 belastet sind. Die Sperrhülsen 42 definieren die neutrale Mittelstellung der Schaltschienen 25, 26, 27.

Die Drehlagen der Schaltwelle 14 bzw. des Schaltstücks 13 und damit die Schaltstellungen der Getriebegänge sind durch eine Arretierhülse 44 gesichert, die federnd in Ausnehmungen einer an der Schaltwelle 14 befestigten Rastscheibe 45 eingreifen.

## Patentansprüche

1. Schaltvorrichtung für ein synchronisiertes Zahnräderwechselgetriebe eines Kraftfahrzeuges mit einem am Getriebegehäuse (1) angebrachten Schaltgehäuse (7), in dem ein zu den Getriebewellen paralleles Führungsrohr (33) zum Längsführen von Schaltgabeln (10,11, 12) angeordnet ist, wobei die Schaltgabeln in Synchronisierkupplungen (6) der einzelnen Getriebegänge (G1, G2, G3, G4 und G5) eingreifen und von einer Betätigungsvorrichtung bewegbar sind und welches Schaltgehäuse (7) durch einen abnehmbaren Deckel (9) verschlossen ist, **dadurch gekennzeichnet,** daß in dem Deckel (9) die Betätigungsvorrichtung als vormontierbare Baueinheit untergebracht ist und daß die Betätigungsvorrichtung den Schaltfinger (23) und die Schaltsperre als ein auf der Schaltwelle (14) längsverschiebbares Schaltstück (13) beinhaltet und daß Schaltschienen (25, 26, 27) im Getriebegehäuse (1) längsverschiebbar befestigt sind.

2. Schaltvorrichtung nach Anspruch 1, dadurch gekennzeichnet, daß die Betätigungsvorrichtung aus jeweils zwei Getriebegängen zugeordneten Schaltschienen (25, 26, 27) mit in die Schaltgabeln (10, 11, 12) eingreifenden Schaltnasen (31) und einem mit den Schaltschienen (25, 26, 27) zusammenwirkenden, mit einer Schaltwelle (14) drehstarren und auf ihr längsverschiebbaren Schaltstück (13) gebildet ist, dessen Schaltfinger (23) in eine der Schaltschienen (25, 26, 27) eingreift und das mit einem Wählhebel (21) betätigbar ist, der auf einer zur Schaltwelle (14) und zum Führungsrohr (33) senkrechten Vorwählwelle (18) befestigt ist und von außen manuell betätigbar ist.

3. Schaltvorrichtung nach Anspruch 1 und 2, dadurch gekennzeichnet, daß das Schaltstück (13) mittig zu den Schaltschienen (25, 26, 27) liegt und bei seiner Längsbewegung auf der zum Führungsrohr (33) senkrechten Schaltwelle (14) mit kreisförmig begrenzten Sperrnocken (28, 29) in die Kreisaussparungen (30) zweier Schaltschienen (25, 27) einführbar ist, wogegen die zwischen diesen Schaltschienen liegende dritte Schaltschiene (26) durch den in ihre Nut (24) eingreifenden Schaltfinger (23) längsverschiebbar ist, so daß das Schaltstück (13) jeweils eine Schaltschiene (26) betätigt und zugleich die beiden anderen Schaltschienen (25, 27) sperrt.

4. Schaltvorrichtung nach Anspruch 3, dadurch gekennzeichnet, daß die Schaltschienen (25, 26, 27) an beiden Seiten Schlitze (38, 39) aufweisen, die parallel zum Führungsrohr (33) liegen und in die Niete (40, 41) eingepaßt sind, die zur Schaltwelle (14) parallel liegend am Deckel (9) befestigt sind.

5. Schaltvorrichtung nach Anspruch 3, dadurch gekennzeichnet, daß in die Schaltschienen (25, 26, 27) an einer Seite von oben her Sperrhülsen (42) eingreifen, die parallel liegend zur Vorwählwelle (18) im Deckel längsbeweglich eingepaßt und durch Schraubenfedern (43) an die Schaltschienen (25, 26, 27) angedrückt sind.

6. Schaltvorrichtung nach Anspruch 2 und 3, dadurch gekennzeichnet, daß der Längsbewegung des Schaltstücks (13) auf der Schaltwelle (14) zum Vorwählen der Getriebegänge an seinen beiden Stirnseiten anliegende Schraubenfedern (15, 16) entgegenwirken, die das Schaltstück (13) in der dem dritten und vierten Getriebegang (G3, G4) entsprechenden, neutralen Wählstellung halten.

7. Schaltvorrichtung nach Anspruch 2 und 6, dadurch gekennzeichnet, daß die zum Vorwählen des fünften Ganges (G5) und Rückwärtsganges (R) zusammenzudrückende Schraubenfeder stärker bemessen ist, als die der Wählbewegung für den ersten und zweiten Gang (G1, G2) entgegenwirkende Schraubenfeder.

8. Schaltvorrichtung nach Anspruch 2, dadurch gekennzeichnet, daß die Drehlagen des Schaltstücks (13) und damit die Schaltstellungen der Getriebegänge durch eine federnde Rastierung (44, 45) gesichert sind.

9. Schaltvorrichtung nach Anspruch 8, dadurch gekennzeichnet, daß an der drehstarr mit dem Schaltstück (13) verbundenen Schaltwelle (14) eine Rastscheibe (45) befestigt ist, mit deren Ausnehmungen eine im Getriebegehäuse (1) geführte Arretierhülse (44) federnd verrastbar ist.

## Claims

1. A shifting device for a synchronized gearbox of a motor vehicle, having a gear-shift housing (7) which is mounted on the gearbox housing (1) and in which a guide tube (33) parallel to the transmission shafts for guiding gear-shift forks (10, 11, 12) longitudinally is arranged, wherein the gear-shift forks engage in synchronizing clutches (6) of the individual gears (G1, G2, G3, G4 and G5) and are movable by an actuating device, the gear-shift housing (7) being closed by a removable cover (9), **characterized in that** the actuating device is housed in the cover (9) as a structural unit adapted to be pre-assembled, and the actuating device contains the gear-shift finger (23) and the gear-shift lock as a gear-shift member (13) displaceable longitudinally on the gear-shift shaft (14), and gear-shift rails (25, 26, 27) are secured longitudinally displaceably in the gear-box housing (1).

2. A shifting device according to Claim 1, **characterized in that** the actuating device is formed by gear-shift rails (25, 26, 27) associated with two gears respectively and having gear-shift studs (31), engaging in the gear-shift forks (10, 11, 12), and a gear-shift member (13) which cooperates with the gear-shift rails (25, 26, 27), is rotationally rigid with a gear-shift shaft (14) and is displaceable longitudinally thereon and the gear-shift finger (23) of which engages in one of the gear-shift rails (25, 26, 27) and which is actuable by a selector lever (21), the selector lever (21) being secured to a pre-selection shaft (18) at right angles to the gear-shift shaft (14) and to the guide tube (33) and being actuable manually from the outside.

3. A shifting device according to Claims 1 and 2, **characterized in that** the gear-shift member (13) is arranged centrally with respect to the gear-shift rails (25, 26, 27) and during the longitudinal movement thereof on the gear-shift shaft (14) at right angles to the guide tube (33) is insertible with locking cams (28, 29) defined by a circle into the circular recesses (30) in two gear-shift rails (25, 27), whereas the third gear-shift rail (26) situated between the said gear-shift rails is displaceable longitudinally through the gear-shift finger (23) engaging in the groove (24) thereof, so that the gear-shift member (13) respectively actuates a gear-shift rail (26) and at the same time locks the other two gear-shift rails (25,27).

4. A shifting device according to Claim 3, **characterized in that** the gear-shift rails (25, 26, 27) are provided on both sides with slots (38, 39) which are arranged parallel to the guide tube (33) and into which rivets (40, 41) - arranged parallel to the gear-shift shaft (14) and secured on the cover (9) - are fitted.

5. A shifting device according to Claim 3, **characterized in that** blocking sleeves (42)-fitted in the cover so as to be movable longitudinally and situated parallel to the pre-selection shaft (18) and pressed against the gear-shift rails (25, 26, 27) by helical springs (43) - engage in the gear-shift rails (25, 26, 27) on one side from above.

6. A shifting device according to Claims 2 and 3, **characterized in that** the longitudinal movement of the gear-shift member (13) on the gear-shift shaft (14) for pre-selecting the gears is counteracted by helical springs (15, 16) resting against the two end faces of the gear-shift member (13) and retaining the gear-shift member (13) in the neutral selection position which corresponds to the third and fourth gears (G3, G4).

7. A shifting device according to Claims 2 and 6, **characterized in that** the helical spring to be compressed for pre-selecting the fifth gear (G5) and the reverse gear (R) is made stronger than the helical spring counteracting the selection movement for the first and second gears (G1, G2).

8. A shifting device according to Claim 2, **characterized in that** the rotational positions of the gear-shift member (13) and therefore the shifting positions of the gears are secured by a resilient catch fastening (44, 45).

9. A shifting device according to Claim 8, **characterized in that** a catch plate (45) is secured to the gear-shift shaft (14) connected rotationally rigidly to the gear-shift member (13), a locking sleeve (44) guided in the gearbox housing (1) being resiliently lockable with the recesses in the said catch plate (45).

## Revendications

1. Dispositif de manoeuvre d'une boîte de changement de vitesse d'un véhicule automobile comportant un boîtier de manoeuvre (7), monté sur la boîte de vitesses (1) dans lequel un tube de guidage (33), parallèle aux arbres de transmission, est prévu pour le guidage longitudinal de fourches de manoeuvre (10, 11, 12), les fourches de manoeuvre s'engageant dans des accouplements de synchronisation (6) des différents rapports de transmission (G1, G2, G3, G4 et G5) et étant déplaçables par un dispositif d'actionnement et le boîtier de manoeuvre (7) étant fermé par un couvercle (9) amovible, caractérisé en ce que dans le couvercle (9) le dispositif d'actionnement est logé sous la forme d'une unité de construction à prémonter et en ce que le dispositif d'actionnement contient le doigt de manoeuvre (23) et le blocage de manoeuvre sous la forme d'une pièce de manoeuvre (13) coulissant longitudinalement sur l'arbre de manoeuvre (14) et en ce que des glissières de manoeuvre (25, 26, 27) sont fixées de manière à coulisser longitudinalement dans la boîte de vitesses (1).

2. Dispositif de manoeuvre selon la revendication 1, caractérisé en ce que le dispositif d'actionnement est formé par des glissières de manoeuvre (25, 26, 27), associées à deux rapports de transmission avec des ergots de manoeuvre (31) s'engageant dans les fourches de manoeuvre (10, 11, 12) et par une pièce de manoeuvre (13) coopérant avec les glissières de manoeuvre (25, 26, 27), solidaires en rotation avec un arbre de manoeuvre (14) et coulissant longitudinalement sur celui-ci, dont le doigt de manoeuvre (23) s'engage dans l'une des glissières de manoeuvre (25, 26, 27) et peut être actionné avec un levier de sélection (21), qui est fixé sur un arbre de présélection (18) perpendiculaire à l'arbre de manoeuvre (14) et au tube de guidage (33) et qui peut être actionné manuellement, de l'extérieur.

3. Dispositif de manoeuvre selon les revendications 1 et 2, caractérisé en ce que la pièce de manoeuvre (13) se trouve au milieu des glissières de manoeuvre (25, 26, 27) et, lors de son déplacement longitudinal sur l'arbre de manoeuvre (14), perpendiculaire au tube de guidage (33), elle peut être introduite avec des cames de blocage (28, 29) de forme circulaire, dans les découpes circulaires (30) de deux glissières de manoeuvre (25, 27), tandis que la troisième glissière de manoeuvre (26), se trouvant entre ces glissières de manoeuvre, peut être déplacée longitudinalement par le doigt de manoeuvre (23) s'engageant dans sa rainure (24), ce qui fait que la pièce de manoeuvre (13) actionne chaque fois une glissière de manoeuvre (26) et bloque en même temps les deux autres glissières de manoeuvre (25, 27).

4. Dispositif de manoeuvre selon la revendication 3, caractérisé en ce que les glissières de manoeuvre (25, 26, 27) présentent, sur les deux côtés, des fentes (38, 39) qui sont parallèles au tube de guidage (33) et qui sont ajustées dans les rivets (40, 41), qui sont fixés parallèlement à l'arbre de manoeuvre (14), sur le couvercle (9).

5. Dispositif de manoeuvre selon la revendication 3, caractérisé en ce que dans les glissières de manoeuvre (25, 26, 27) s'engagent sur un côté, à partir du haut, des douilles de blocage (42) qui sont parallèles à l'arbre de présélection (18) et sont ajustées de manière à se déplacer longitudinalement dans le couvercle et sont pressées par des ressorts hélicoïdaux (43) contre les glissières de manoeuvre (25, 26, 27).

6. Dispositif de manoeuvre sel on les revendications 2 et 3, caractérisé en ce qu'au déplacement longitudinal de la pièce de manoeuvre (13) sur l'arbre de manoeuvre (14) pour la présélection des rapports de transmission, s'opposent des ressorts hélicoïdaux (15, 16), s'appliquant sur ses deux côtés frontaux, qui maintiennent la pièce de manoeuvre (13) dans la position de sélection neutre, correspondant au troisième et au quatrième rapports de transmission (G3, G4).

7. Dispositif de manoeuvre sel on les revendications 2 et 6, caractérisé en ce que le ressort hélicoïdal à comprimer pour la présélection du cinquième rapport (G5) et de la marche arrière (R), est plus fort que le ressort hélicoïdal s'opposant au déplacement de sélection du premier et du deuxième rapports (G1, G2).

8. Dispositif de manoeuvre selon la revendication 2, caractérisé en ce que les positions de rotation de la pièce de manoeuvre (13) et donc les positions de manoeuvre des rapports de transmission sont bloquées par un encliquetage (44, 45) élastique.

9. Dispositif de manoeuvre selon la revendication 8, caractérisé en ce que sur l'arbre de manoeuvre (14), relié solidaire en rotation à la pièce de manoeuvre (13), est fixé un disque d'encliquetage (45) avec les évidements duquel une douille d'arrêt (44), guidée dans la boîte de vitesses (1), peut s'encliqueter de manière élastique.
